# EUROPÄISCHE PATENTANMELDUNG

(11) **EP 2 509 299 A1**
(43) Veröffentlichungstag der Anmeldung: **10.10.2012**
(21) Anmeldenummer: 11161780.9
(22) Anmeldetag: 08.04.2011
(51) Int. Cl.: H04N 5/00, G06F 9/445

(54) **Methode zum aktualisieren des softwarestatus von fernsehempfängern**

(71) Anmelder: Technisat Digital Gmbh, 54550 Daun (DE)
(72) Erfinder: ARLT, Dipl.-Ing. (FH) Nico, 01156, Dresden (DE); ALTEHOLZ, Dipl.-Phys. Thorsten, 09131, Chemnitz (DE)

(57) **Zusammenfassung**

Eine Methode zum Aktualisieren von Empfänger-Firmware und von geräteinternen Datenbankdateien von internetfähigen Fernsehempfängern nutzt zum Datentransfer von Aktualisierungsdateien zu den Fernsehempfängern eine Client-Server-Struktur in einem internetgestützten Verteilnetzwerk.

Im Verteilnetzwerk ist ein Aktualisierungsdienstanbieter ASP mit einem Aktualisierungsserver verbunden, der durch eine serverseitige Anwendungs-Software S-AS die Funktion eines Aktualisierungsmanagers AM übernimmt. Der Aktualisierungsmanager AM nimmt über eine Netzwerkadresse NA0 zentral Anfragen von Fernsehempfängern nach Aktualisierungsdateien entgegen und führt gegenüber von Dateitransferservern im Verteilnetzwerk eine Serverleitfunktion zum Übertragen von angeforderten Aktualisierungsdateien aus. Die Anfragen nach Aktualisierungsdateien generiert eine empfängerseitige Anwendungs-Software R-AS in jedem anfragenden Fernsehempfänger TVr automatisch.

Die Maßnahme soll eine verbesserte Lastverteilung der Transferlasten unter den Aktualisierungsservern im Verteilnetzwerk, eine größere Vielfalt von verfügbaren Aktualisierungsservern und eine Verkürzung der Transferzeit bewirken.

## Beschreibung

### Anwendungsgebiet der Erfindung

Die Erfindung betrifft eine Methode zum Aktualisieren eines Softwarestatus von digitalen Fernsehempfängern für digitalen Videorundfunk und Kabelfernsehen mit einem Netzwerkanschluss, welcher fähig ist, über den Netzwerkanschluss eine Schnittstelle zu einem Internetdienst aufzubauen. Insbesondere betrifft die Erfindung ein automatisches Aktualisieren der Empfänger-Firmware und von Rundfunkdienstlisten mit Übertragungsparametern zu verfügbaren Rundfunkdiensten sowie das Beschaffen von zusätzlicher Begleitinformation zum angebotenen Medieninhalt für eine elektronische Programmführungseinrichtung.

Die Erfindung ist anwendbar für Empfangsgeräte für den Marktbereich für Rundfunk- bzw. Kabelfernsehdienste, nachfolgend als ,digitalen Videorundfunk', DVB, bezeichnet, welche verschiedene Verbreitungsformen und Übertragungswege für Medieninhalt, wie per Satellit, Breitbandkabel, terrestrisch oder über Internetverbindungen, umfassen können und einen bidirektionalen Zugang zu einem Kommunikationsnetzwerk besitzen.

### Technischer Hintergrund der Erfindung

Heutige Fernsehempfänger für digitale Rundfunk- bzw. Kabelfernsehdienste geben neben dem Inhalt von Rundfunkdiensten für Hör- oder Fernsehsendungen als multimediale Steuerzentrale auch den Inhalt anderer Medienquellen, beispielsweise von Audio- und Videoabspielgeräten, Fotospeichermedien bzw. geben als Hybridempfänger auch Inhalt aus dem Internet wieder.

Zum einheitlichen Steuern und Verwalten der komplexen Funktionsstruktur eines Fernsehempfängers dient eine auf den Empfängertyp angepasste Firmware. Im Interesse einer nutzerfreundlichen Bedienbarkeit des Fernsehempfängers stellt die empfängertypische Firmware dem Nutzer eine prozessorgestützte grafische Benutzerschnittstelle zur Verfügung, welche als wesentliche Bedienkomponente eine interaktive Programmführungseinrichtung enthält.

Die Programmführungseinrichtung nutzt eine Rundfunkdienstliste mit Einstellinformation zum digitalen Videorundfunk und Begleitinformation zum angebotenen Medieninhalt, sogenannte ,Metadaten', welche in einer empfängerinternen Programmführungsdatenbank gespeichert sind.

Die Rundfunkdienstliste enthält Einstellinformation, welche der Empfänger-Firmware eine automatische Installationsfunktion zu den aktuell verfügbaren Rundfunkdiensten ermöglicht. Somit entfallen beim Kunden zeitraubende automatische Sendersuchläufe sowohl bei einer Empfängererstkonfiguration als auch periodische Sendersuchläufe zum Erkennen von Parameteränderungen. Die Rundfunkdienstliste ermöglicht der Firmware auch, automatisch Listeneinträge nach dem Abschalten von Diensten aus der Programmführungseinrichtung zu löschen.

Darüber hinaus steuert die Programmführungseinrichtung auch die Wiedergabe von Medieninhalt von peripher angeschlossenen Geräten sowie eine inhaltliche Verknüpfung von Rundfunk-und Internetinhalt.

Ein externer Listenmanagerdienst aktualisiert periodisch die Rundfunkdienstlisten durch Herausgabe von neuen Dateiversionen zum Aktualisieren der empfängerinternen Datenbank.

Für den mit der Anmeldung beanspruchten Schutz ist es unerheblich, ob der Fernsehempfänger selbst interne Mittel für eine Audio- und Videowiedergabe aufweist oder als Beistellgerät, eine sogenannte ,Set-Top-Box', mit einer Wiedergabevorrichtung verbunden ist. Im Sinne der Anmeldung ist auch eine Set-Top-Box, die mit einer beliebigen Wiedergabevorrichtung, beispielsweise einem Videoprojektor, verbunden ist, ein Fernsehempfänger.

In jüngster Zeit wurden die Gebrauchsfunktionen eines Fernsehempfängers mit oder ohne integrierten Audio- und Videowiedergabeteil dahingehend erweitert, dass diese zusätzliche Funktionen eines intelligenten, interaktiven Multimedia-Terminals übernehmen, welches neben Hör-und Fernsehsendungen auch Medieninhalt von peripheren Geräten bzw. von Internetdiensten miteinander verbindet und nutzerfreundlich präsentiert.

Fernsehempfänger, die sowohl Inhalt von Videorundfunk als auch von Internetdiensten über einen Internetzugang empfangen können, werden allgemein als ,Hybridempfänger' bezeichnet und enthalten mindestens ein digitales Videorundfunkempfangsteil, beispielsweise nach den Standards wie DVB-T, DVB-S oder DVB-C, und zusätzlich einen Netzwerkanschluss für einen Datenaustausch zur Nutzung von Internetdiensten. Somit ist neben dem Herstellen von Datenverbindungen zu einem Netzwerkknoten unter anderem auch ein Auslesen von speziellen Internetseiten über Internetverbindungen und ein Abfordern von Hör- oder Fernsehsendungen oder anderer Information aus dem Internet mit dem Fernsehempfänger möglich.

Für eine Funktion als interaktives Multimedia-Terminal kann die grafische Benutzerschnittstelle des Empfängers auch die Vielfalt verfügbaren Medieninhalts von angeschlossenen Geräten komfortabel miteinander verknüpfen. Deshalb wird die Benutzerschnittstelle als interaktive Programmführungseinrichtung ausgeführt, die innerhalb der Empfänger-Firmware eine erhebliche Rechenkapazität nutzt und sowohl die Betriebs- und Einstellparameter der verfügbaren Mediendienste als auch Programm- und Medieninformation zum Medieninhalt in lokalen Speichermitteln nichtflüchtig, beispielsweise in Form einer geräteinternen relationalen Datenbasis, speichert.

Ähnlich zu einem Computerbetriebssystem muss auch die Firmware des Fernsehempfängers bzw. müssen die in den geräteinternen Datenspeichermitteln abgelegten Betriebs- und Einstellparameter sowie Information zum Programminhalt durch regelmäßiges Aktualisieren auf dem aktuellen Stand gehalten werden. Das Aktualisieren der Firmware ermöglicht einerseits Verbesserungen oder Erweiterungen der Gerätefunktionen bzw. ein Beseitigen von Fehlfunktionen.

Für eine fehlerfreie Funktion der Programmführungseinrichtung sind eine aktualisierte Rundfunkdienstliste sowie die aktualisierten Metadaten mit Begleitinformation zum angebotenen Medieninhalt eine wichtige Voraussetzung.

Sowohl das Aktualisieren der Empfänger-Firmware als auch ein Aktualisieren der geräteeigenen relationalen Datenbasis kann mithilfe eines Aktualisierungsdienstes erfolgen, der entsprechende Aktualisierungsdateien anbietet.

Der Datenumfang für die Empfänger-Firmware, insbesondere die für Hybridempfänger, steigt mit dem Grad der Modernisierung und den zunehmend komplexen Funktionen ständig, sodass allein zum Austausch der installierten Firmware pro Empfängertyp jeweils eine Programmdatei mit einem Datenumfang von mehreren Millionen Byte von einem Aktualisierungsserver zu jedem Fernsehempfänger zu übertragen ist. Dabei kommt erschwerend hinzu, dass die Empfänger-Firmware im Gegensatz zu einem Betriebssystem eines Computers stark auf dessen Hardwarestruktur bezogen ist und deshalb in der Regel jeder Empfängertyp eine eigene Firmware-Version benötigt. Mit einer wachsenden Typenvielfalt der in Gebrauch befindlichen Empfänger erhöht sich damit der Bedarf an Datentransferkapazität.

Wenn der Fernsehempfänger beispielsweise digitalen Fernsehrundfunk per Satellit empfängt, dann wächst auch der Datenbedarf zur Pflege der Rundfunkdienstliste erheblich, da eine Rundfunkdienstliste Einstellparameter für mehrere hundert etablierte Rundfunkdienste enthält. Häufige Änderungen der Sendeparameter oder der Dienstnamen sowie Abschaltungen von bestehenden Diensten führen dazu, dass eine nicht aktualisierte geräteinterne Rundfunkdienstliste innerhalb von wenigen Monaten zu einem beachtlichen Teil unbrauchbar ist und deshalb wie die Firmware ebenfalls aktualisiert werden muss.

Ein Hybridempfänger erfordert beispielsweise ein Aktualisieren folgender Datenarten:
- Programmdateien zum Aktualisieren oder Erweitern der Empfänger-Firmware, insbesondere der grafischen Benutzerschnittstelle, beispielsweise durch sogenannte ,Widgets' oder andere eigenständige Browserprogramme;
- Aufstellungen mit Einstell- und Übertragungsparametern zu aktuell verfügbaren Rundfunkdiensten zum Pflegen der Rundfunkdienstliste und Aufstellungen mit Internetadressen zum Aufruf von Internetdiensten mithilfe der Programmführungseinrichtung und
- Programmführungsdaten, wie Metadaten, zu gegenwärtig und zukünftig verfügbarem Medieninhalt, Begleitinformation zu Videorundfunksendungen bzw. zu Medieninhalt, der über einen Aufzeichnungsträger oder ein Kommunikationsnetzwerk beschafft werden kann.

Das Übertragen der Programmführungsdaten erfordert in der Regel täglich eine kalkulierbare Datentransferkapazität in gleicher Größenordnung, die jeweils zur gleichen Tageszeit etwa eine ähnliche Datentransferlast umfasst, wobei alle Empfängertypen diese Datenart parallel nutzen.

Im Gegensatz dazu ist es nur schwer möglich, die erforderliche Datentransferkapazität für die übrigen Datenarten zu kalkulieren, da diese sowohl stark von der Empfänger-Hardware als auch von der Änderungshäufigkeit der Firmware und der Rundfunkdienstliste abhängen. Die Rundfunkdienstliste wird direkt vom Status der aktuell im Betrieb befindlichen Rundfunkdienste beeinflusst und ist vom Aktualisierungsdienstanbieter nur schwer kalkulierbar.

Üblicherweise wird eine Firmware nur in unregelmäßigen Abständen von einigen Wochen bis zu einigen Monaten geändert oder ausgetauscht. Darüber hinaus ist in der Regel jede Firmware immer nur im Zusammenspiel mit der Hardware eines einzigen Empfängertyps nutzbar.

Da nicht jeder Empfänger seine aktuelle Softwareversion unverzüglich installiert, muss zumindest die aktuelle Dateiversion für jeden Empfängertyp, den der Empfängerhersteller zur Nutzung in den Umlauf gebracht hat, bis zur Herausgabe einer Ablöseversion verfügbar sein.

Aus verschiedenen Dokumenten ist bereits bekannt, für eine regelmäßige Aktualisierung der Empfänger-Firmware und der internen Datenbasis aktuelle Dateiversionen von Aktualisierungsdiensten über die Empfängerantenne in Form von Datenrundfunk zu beziehen. Eine solche Lösung beschreibt beispielsweise das Dokument WO91/00670, "Verfahren und Vorrichtung für das Senden und Empfangen von Fernsehprogramminformationen".

Für die genannten Datenarten stellt ein mit einem Videorundfunksender verbundener Dateiserver eines Aktualisierungsdienstanbieters Aktualisierungsdateien sowohl in Form von entsprechenden Programmdateien als auch Datenbankdateien bereit. Senderseitig fügt ein Multiplexer die Aktualisierungsdateien dem MPEG-Transport-Multiplex eines ausgewählten digitalen Videorundfunkdienstes hinzu und die verschiedenen Datenarten werden dabei mittels eines Datenkarussells in zeitlicher Folge als unabhängiger Datendienst im Multiplex des ausgewählten Videorundfunkdienstes übertragen.

Je nach Konfiguration der Firmware empfangen die Fernsehempfänger per Datenrundfunk von den Aktualisierungsdiensten automatisch bzw. auf Wunsch sowohl die typenbezogene aktuelle Firmware als auch die aktuelle Rundfunkdienstliste, sobald sich Übertragungsparameter geändert haben, Rundfunkdienste gelöscht wurden bzw. neue hinzugekommen sind.

Die Datenbank der elektronischen Programmführungseinrichtung wird aktualisiert, indem der Fernsehempfänger ebenfalls per Datenrundfunk täglich oder entsprechend einer Nutzeranfrage von einem herstellerspezifischen Aktualisierungsdienst redaktionell aufbereitete Metadaten zum verfügbaren Medieninhalt, insbesondere zu Fernseh- und Hörrundfunksendungen, empfängt.

Ein Vorteil des Datenrundfunks besteht darin, dass beliebig viele Fernsehempfänger ohne eine Rückkommunikation simultan von einem einzigen Sender zu bestimmten Datentransferzeiten in einem energiereduzierten Empfangszustand gemeinsam vom Aktualisierungsserver die gewünschten Aktualisierungsdateien empfangen können.

Nach dem empfängerseitigen Erkennen und Extrahieren der benötigten Aktualisierungsdateien aus dem empfangenen Elementarstrom führt die Empfänger-Firmware automatisch oder nach Kundenwunsch die Aktualisierung der oben dargestellten Datenarten aus.

Als Nachteil der genannten Aktualisierungsmethode hat sich jedoch die begrenzte zusätzlich verfügbare Datenübertragungsrate im MPEG-Transport-Multiplex des ausgewählten digitalen Videorundfunkdienstes erwiesen. Eine kumulativ wachsende Typenvielfalt der im Umlauf befindlichen Empfänger eines Herstellers bewirkt ein Anwachsen der zu übertragenden Gesamtdatenmenge. Folglich erhöht sich auch die Periodendauer im genannten Datenkarussell und damit die Wartezeit bis zum Abschluss der Aktualisierung. In absehbarer Zeit wird die nutzbare Datenübertragungsrate des Datenrundfunks die geforderte Gesamtdatenmenge für alle Empfängertypen des Herstellers nicht mehr hinreichend aktuell und zeitnah erbringen können.

Während der Aktualisierung muss der Fernsehempfänger über die Wartezeit hinaus bis zum vollständigen Dateiempfang ein Rundfunkempfangsteil mit Mitteln zur Signalrückgewinnung sowie den rauscharmen Signalumsetzer, LNB, im Kopf der Satellitenantenne durch Energiezufuhr betriebsbereit halten. Während des energiereduzierten Empfangszustandes können die genannten elektronischen Mittel eine Energiezufuhr in der Größenordnung bis zu etwa 30 Watt aufnehmen. Diese Energie ist auch erforderlich, während das Rundfunkempfangsteil wartet, bis das Datenkarussell im Aktualisierungsserver die gewünschte Datei vollständig übertragen hat. Ein Erhöhen der Periodendauer des Datenkarussells bewirkt somit zwangsläufig, dass sich ohne einen Nutzervorteil für die Gesamtheit der Fernsehempfänger eines Herstellers der nächtliche Energieverbrauch im energiereduzierten Empfangszustand aufgrund der längeren durchschnittlichen Wartezeit bis zum vollständigen Transfer der Aktualisierungsdateien erhöht.

Nachteilig ist außerdem, dass das Rundfunkempfangsteil während der gesamten Transferdauer nicht für Videorundfunkempfang nutzbar ist. Sofern der Fernsehempfänger nur ein einziges Rundfunkempfangsteil aufweist, könnte die Transferdauer auch mit einem Zeitbereich kollidieren, den der Nutzer für private Videoaufzeichnungen vom laufenden Programm nutzen möchte.

Damit entstehen mit zunehmender Typenvielfalt Engpässe beim Aktualisieren der Firmware und der geräteinternen Programmführungsdatenbank. Somit wird in Zukunft die verfügbare Datentransferrate der genutzten Rundfunkverbindung kaum noch ein hinreichend kurzfristiges und zeitnahes Aktualisieren für alle in der Benutzung befindlichen Empfängertypen ermöglichen.

Darüber hinaus ist bereits bekannt, dass Hybridempfänger ein Internet-Zugangsprogramm, aufweisen, das sich Aktualisierungsdateien nach dem Client-Server-Prinzip über eine Internetverbindung von einem Aktualisierungsserver beschafft. Dabei kommuniziert die empfängerseitige Anwendung mit dem Aktualisierungsserver und mindestens ein herstellerspezifischer Aktualisierungsdienst für typenbezogene Firmware bietet abhängig vom Aktualisierungsbedarf Aktualisierungsdateien für den Fernsehempfänger an. Das heißt, jeder Fernsehempfänger bezieht vom Aktualisierungsserver nur Aktualisierungsdateien entsprechend seiner Anfrage im Dialog über seine Internetschnittstelle. Nach dem entsprechenden Datenaustausch überträgt der Aktualisierungsserver nur die benötigten Aktualisierungsdateien zum Empfänger. Es ist kein Datenkarussell erforderlich. Somit wird die Wartezeit, welche das Datenkarussell verursacht, vermieden.

In Anbetracht der hohen Gesamtanzahl der im Umlauf befindlichen Fernsehempfänger eines Herstellers, welche eine Gesamtzahl in einer Größenordnung von einer Million Empfängern erreichen kann, ist ein einzelner Aktualisierungsserver in einer Client-Server-Struktur während einer hohen Anfragedichte mit dem Datentransfer überlastet.

Da Programmdateien für eine Firmware-Aktualisierung von komplexen Fernsehempfängern durchaus eine Größenordnung von mehr als 10 000 Kilobyte aufweisen können und die Datenmenge für redaktionell aufbereitete Metadaten mit zunehmend steigendem Angebot an Mediendiensten ständig wächst, kann bei einer hohen Anfragedichte eine Client-Server-Struktur mit nur einem einzelnen herstellerspezifischen Aktualisierungsserver die empfängerseitigen Anfragen nur schwer in einer vertretbaren Zeitdauer realisieren.

Zum Erhöhen der Datentransferrate ist es auch bereits bekannt, die erforderliche Serverlast auf mehrere Server zu verteilen. Eine solche Lastverteilung ist in der Netzwerktechnik auch als Serverlastverteilung oder ,Server Load Balancing', SLB, bekannt.

Dabei liefert ein Verteilnetzwerk mit mehreren verschieden lokalisierten und über das Internet verbundenen Servern auch umfangreiche Inhalte eines Internetdienstes, insbesondere große Aktualisierungsdateien, ohne Transferprobleme aus.

Ein solches Verteilnetzwerk wird auch als ,Content Distribution Network', CDN, bezeichnet. Die verschieden lokalisierten Server des Verteilnetzwerkes sollen Anfragen nach Aktualisierungsdateien, nachfolgend Inhalt genannt, möglichst ökonomisch befriedigen.

Eine einfache und kostengünstigste Lastverteilungslösung nutzt einen Internet-Verzeichnisdienst, welcher die Namensvergabe von Internetdiensten verwaltet, das sogenannte ,Domain Name System', DNS. Die Verteilung erfolgt dadurch, dass der Name eines Datentransferdienstes, dessen Last auf mehrere Aktualisierungsserver zu verteilen ist, der sogenannte ,Hostname', vom DNS gleichzeitig mehrere maschinenlesbare Internetadressen in wechselnder Reihenfolge erhält. Die empfängerseitige Anwendungs-Software im Fernsehempfänger legt dann fest, an welche von den verfügbaren Aktualisierungsservern sie ihre Datenanfrage richtet. Auf diese Weise verteilen sich Anfragen von Empfängern statistisch auf alle Server der Client-Server-Struktur. Die bekannte Methode vermeidet somit, dass eine zentrale Instanz grundsätzlich alle empfängerseitigen Anfragen erhält und realisiert im Durchschnitt eine etwa gleiche Anzahl von Anfragen an alle verfügbaren Aktualisierungsserver.

Die Methode schafft für die vorgesehene Anwendung jedoch keinen zufriedenstellenden Ausgleich der realen Transferbelastung einzelner Server in Abhängigkeit von stark schwankenden Dateigrößen und ihrer Nachfrage. So berücksichtigt diese Methode nicht, wenn ein regionaler Server überwiegend einige Tausend Anfragen nach aktuellen Rundfunk- oder Internetdienstlisten bedient, welche in der Regel jeweils Daten in einer Größenordnung von wenigen Kilobyte enthalten, während ein anderer regionaler Server überwiegend Anfragen nach aktueller Firmware in der Größenordnung von einigen Tausend Kilobytes erhält.

### Darstellung der Erfindung

Die Aufgabe der vorliegenden Erfindung besteht darin, für eine Methode zum Aktualisieren eines Softwarestatus von Fernsehempfängern sowohl bezüglich der Empfänger-Firmware als auch der geräteinternen Datenbankdateien über ein internetgestütztes Verteilnetzwerk mit einer Client-Server-Struktur und mehreren Aktualisierungsservern für den Transfer von Aktualisierungsdateien eine verbesserte Lastverteilung der Transferlasten unter den Aktualisierungsservern im Verteilnetzwerk zu erreichen.

Die Methode zum Aktualisieren des Softwarestatus geht von einer Verteilnetzwerkstruktur mit einem Verbund von verschieden lokalisierten Aktualisierungsservern aus, welche empfängerseitige Anfragen von in den Fernsehempfängern installierter Anwendungs-Software simultan und durch eine Serverleitfunktion gesteuert beantworten. Die Aktualisierungsserver des Serververbundes übertragen über eine bidirektionale Kommunikationsverbindung zu jedem anfragenden Fernsehempfänger jeweils nur die aktuelle Version von Aktualisierungsdateien, die dem Hardwaretyp des anfragenden Fernsehempfängers entspricht.

Gemäß der Erfindung enthält die Verteilnetzwerkstruktur mindestens einen Aktualisierungsserver, der mittels einer serverseitigen Anwendungs-Software als Aktualisierungsmanager konfiguriert ist und für schnellstmögliche Reaktionen auf empfängerseitige Anfragen und zum Koordinieren eines entsprechenden Datentransfers eine Serverleitfunktion ausführt.

Die Serverleitfunktion realisiert mithilfe einer Einstiegsseite einen Netzwerkzugang zu einem Aktualisierungsdienstanbieter für empfängerseitige Internetanfragen.

Dabei überträgt der Aktualisierungsmanager Kontaktdaten des Aktualisierungsdienstanbieters zum anfragenden Fernsehempfänger, mit denen eine empfängerseitige Anwendungs-Software im Rahmen der grafischen Benutzerschnittstelle mindestens eine interaktive Menüseite für den Wiedergabeschirm generiert, sodass der Empfängernutzer mittels eines Fernbediengebers oder eines anderen empfängerseitigen Eingabegerätes, wie einer Computermaus, in einer interaktiven Kommunikation mit dem Aktualisierungsmanager verfügbare Aktualisierungsangebote und entsprechende Aktualisierungsdateien abfordern kann.

Vorteilhaft ist die serverseitige Anwendungs-Software als Webserver konfiguriert und kommuniziert zur Interaktion mit der empfängerseitigen Anwendungs-Software über ein standardisiertes Übertragungsprotokoll.

Zum besseren Unterscheiden der Serverfunktionen im Serververbund werden nachfolgend Aktualisierungsserver ohne Serverleitfunktion als Dateitransferserver bezeichnet.

Dateitransferserver sind vorteilhaft physisch und räumlich vom Aktualisierungsmanager getrennt angeordnet und können auch auf Großrechnern, welche neben dem Datentransfer für den Aktualisierungsdienstanbieter auch noch Internetdienste anderer Dienstanbieter anbieten, als Anwendungs-Software installiert sein.

Der Aktualisierungsdienstanbieter gibt in unregelmäßigen Zeitabständen aktuelle Versionen der Aktualisierungsdateien heraus, welche mindestens nach Empfängertypen geordnet sind, sofern diese hardwarebezogenen Inhalt, beispielsweise für Empfänger-Firmware-Aktualisierungen, aufweisen, und verteilt Dateikopien von diesen Dateien an die Aktualisierungsserver des Verteilnetzwerks.

Der Aktualisierungsmanager erstellt anhand der verteilten Dateikopien mindestens eine vom Aktualisierungsdienstanbieter gewartete Dateiversionsliste mit aktuell gültigen Dateiversionen von Aktualisierungsdateien, wobei die Liste auch die Verfügbarkeit entsprechender Dateikopien auf den Dateitransferservern umfasst.

Für Datenbankdateien können auch weitere Sortierkriterien zum Strukturieren der Dateiversionsliste herangezogen werden. Beispielsweise kann eine zusätzliche Sortierung auch anhand von Satellitenpositionen und/oder einer Sprachauswahl erfolgen und damit die Information für die Rundfunkdienstliste im Fernsehempfänger auf mehrere entsprechend kleinere Dateiversionen verteilt werden.

Wenn der Aktualisierungsdienstanbieter anstelle einer komplexen Datenbankdatei mehrere kleinere Dateien mit einer Untermenge von Metadaten anbietet, deren Inhalt an empfängerseitige Satellitenpositionen und/oder an eine Sprachauswahl angepasst ist, wird die Datentransferlast beispielsweise für die Dateikopien von Metadaten der Programmführungseinrichtung deutlich reduziert.

Gemäß der Erfindung stellt die empfängerseitige Anwendungs-Software eines Fernsehempfängers beim Erkennen eines Bedarfs an Kopien von Aktualisierungsdateien für die geräteinterne Firmware und den Datenbankdateien mittels eines Netzwerkanschluss und einer empfängerseitig programmierten Netzwerkadresse eine erste bidirektionale Kommunikationsverbindung zur serverseitigen Anwendungs-Software des Aktualisierungsmanagers her.

Zum Vereinfachen der interaktiven Kommunikation mit dem Aktualisierungsmanager bezieht die empfängerseitige Anwendungs-Software vom Aktualisierungsmanager eine Kopie der Dateiversionsliste und generiert ein interaktives Kommunikationsmenü, welches auf dem Wiedergabeschirm angezeigt und mit den Bedienmitteln des Fernsehempfängers benutzbar ist.

Die Anwendungs-Software des Aktualisierungsmanagers reagiert auf jede individuelle Anfrage einer empfängerseitigen Anwendungs-Software über die erste bidirektionale Kommunikation nach Aktualisierungsdateien mit folgenden Aktivitäten:
- Ermitteln eines Bedarfs an Aktualisierungsdateien im anfragenden Fernsehempfänger
- Definieren einer zum Transfer von Aktualisierungsdateien zum Fernsehempfänger benötigten Datentransferlast
- Klassifizieren der empfängerseitigen Anfragen hinsichtlich ihrer Datentransferlast und
- Zuweisen eines Aktualisierungsservers zum Übertragen der gewünschten Aktualisierungsdateien zum anfragenden Fernsehempfänger.

Im Rahmen ihrer Serverleitfunktion verteilt die Anwendungs-Software im Aktualisierungsmanager die Datentransferlasten derart auf die Aktualisierungsserver des Verteilnetzwerks, dass der Aktualisierungsmanager gewünschte empfängerseitige Anfragen, welche eine Datentransferlast unterhalb eines serverseitig festgelegten Schwellwertes erfordern, unverzüglich über die bestehende erste Kommunikationsverbindung liefert.

Sobald die benötigte Datentransferlast oberhalb des festgelegten Schwellwertes liegt, erfolgt eine Weiterleitung der Anfrage an einen beauftragten Dateitransferserver.

Alternativ dazu sendet der Aktualisierungsmanager dem anfragenden Fernsehempfänger eine Netzwerkadresse zum beauftragten Dateitransferserver, welcher die gewünschte(n) Aktualisierungsdatei(en) für einen späteren Abruf nach erneutem Aufbau einer bidirektionalen Kommunikationsverbindung durch den Fernsehempfänger bereitstellt.

Erst nachdem die bestehende Kommunikationsverbindung zwischen der empfängerseitigen Anwendungs-Software und dem beauftragten Dateitransferserver umgeleitet wurde bzw. nachdem die empfängerseitige Anwendungs-Software erneut eine Kommunikationsverbindung zum beauftragten Dateitransferserver aufgebaut hat, erhält der anfragende Fernsehempfänger vom beauftragten Dateitransferserver auch die zur Anfrage fehlende(n) Aktualisierungsdatei(en).

Im Interesse einer komfortablen und zuverlässigen Aktualisierung der Fernsehempfänger mit Aktualisierungsdateien übernimmt die serverseitige Anwendungs-Software des Aktualisierungsmanagers neben den genannten Serverleitfunktionen noch zusätzliche zentrale Serverleitfunktionen für den Verbund der Aktualisierungsserver. Zu den zusätzlichen Serverleitfunktionen gehören, die Prüfung von Zugangsberechtigungen der empfängerseitigen Anwendungs-Software zu einem Aktualisierungsserver und die Prüfung der Anwendbarkeit von verfügbaren Dateiversionen entsprechend des empfängerseitigen Hardwaretyps bzw. der Hardwarestruktur oder von nutzer- oder ortspezifischen Empfängereinstellungen.

Sofern der Aktualisierungsdienst Versionen zu Datenbankdateien beispielsweise entsprechend einer Sprach- oder Gebietsauswahl, zu verschiedenen Satellitenpositionen und/oder bezüglich verfügbarer Zugangsberechtigungen zu Bezahlfernsehdiensten bereitstellt, ermittelt der Aktualisierungsmanager zusätzlich im Dialog mit empfängerseitigen Anwendungen die entsprechenden nutzer- oder ortspezifischen Empfängereinstellungen, um selbsttätig die angepassten Dateiversionen der Datenbankdateien für den Datentransfer bereitzustellen.

### Bevorzugte Ausführung der Erfindung

Die Erfindung soll nachstehend anhand eines Ausführungsbeispiels erläutert werden.

Zur besseren Veranschaulichung dienen die beigefügten Figuren, von denen zeigen:
FIG. 1 eine grundsätzliche Struktur eines internetgestützten Verteilnetzwerkes von einem Aktualisierungsdienstanbieter mit bidirektionalen Kommunikationsverbindungen zum Datentransfer von Aktualisierungsdateien und
FIG. 2 eine Skizze, die mehr Details zur bidirektionalen Kommunikation eines ausgewählten Fernsehempfängers mit Aktualisierungsservern des internetgestützten Verteilnetzwerkes offenbart.

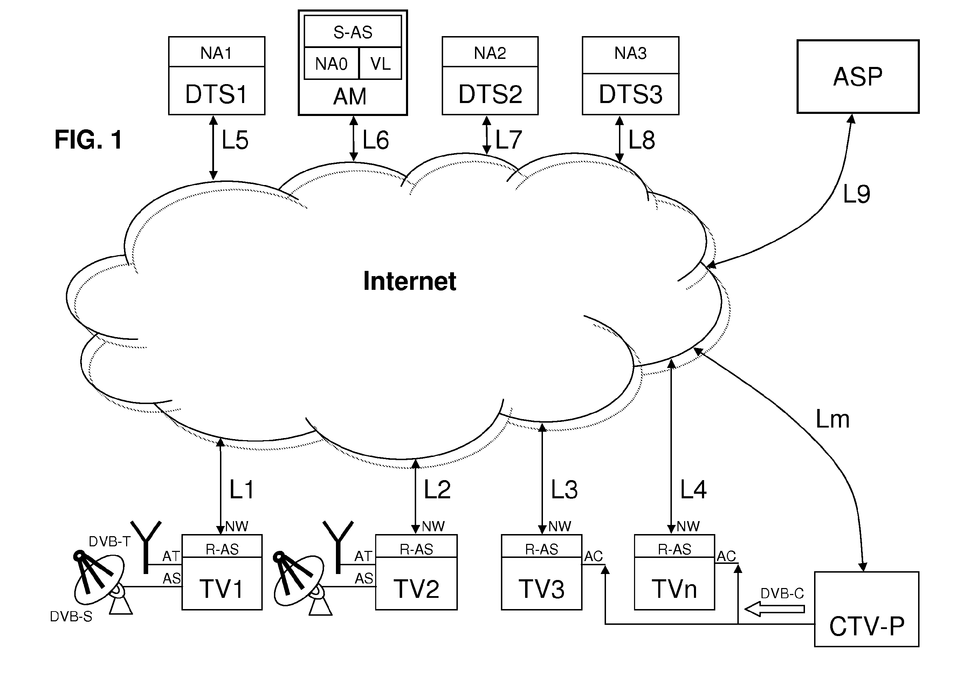

Die FIG.1 zeigt ein internetgestütztes Verteilnetzwerk für Aktualisierungsdateien zum Aktualisieren des Softwarestatus von Fernsehempfängern. Das Verteilnetzwerk verbindet temporär über bidirektionale Kommunikationsverbindungen L1 ... L4 beispielhaft die Fernsehempfänger TV1 ... TVn mit einem zentralen Aktualisierungsdienstanbieter ASP für die Aktualisierungsdateien. Die Fernsehempfänger TV1 ... TVn repräsentieren nur eine geringe Zahl einer Anzahl n im Gebrauch befindlicher Fernsehempfänger, die in verschiedenen Landesregionen und Staaten genutzt werden. In der Praxis wird mindestens eine sechsstellige Anzahl von Fernsehempfängern in kurzen, üblicherweise täglichen Zeitabständen Kontakt zum Aktualisierungsdienstanbieter ASP aufnehmen, um nach Aktualisierungsdateien zu fragen. Dabei werden zumindest täglich Aktualisierungsdateien mit Metadaten zum Inhalt von Fernsehrundfunksendungen abgefragt. Die genannte große Anzahl an Fernsehempfängern macht deutlich, dass nicht zur gleichen Zeit hinreichend viele bidirektionale Kommunikationsverbindungen Lm aufgebaut werden können, um mit dem internetgestützten Verteilnetzwerk alle im Gebrauch befindlichen n Fernsehempfänger synchron zu aktualisieren. Die bidirektionalen Kommunikationsverbindungen L1 ... Lm werden deshalb nur temporär unter Nutzung von Netzwerkprotokollen der Internet-Protokollfamilie aufgebaut.

Die Fernsehempfänger TV1 ... TVn können entweder herkömmliche Fernsehgeräte mit einem Empfangs- und einem Audio/Video-Wiedergabeteil für digitalen Videorundfunk oder auch Vorschaltgeräte, auch Set-Top-Boxen genannt, ohne eigenes Wiedergabeteil sein.

Die Fernsehempfänger TV1 und TV2 sind beispielhaft digitale Fernsehgeräte mit einem Antenneneingang AS zum Empfangen von digitalen Videorundfunk per Satellit DVB-S und einem Antenneneingang AT zum Empfangen von terrestrischen digitalen Videorundfunk DVB-T, während die Fernsehempfänger TV3 und TVn beispielhaft einen Antenneneingang AC zum Empfangen von digitalen Videorundfunk über Kabel DVB-C aufweisen. Alle Fernsehempfänger TV1 ... TVn können deshalb grundsätzlich ihre Softwareaktualisierung wie oben beschrieben auf herkömmliche Weise, das heißt über einen Datenrundfunkkanal beispielsweise über einen Satellitenfernsehdienst oder einen Kabelfernsehanbieter CTV-P durchführen. Das hat die oben beschriebenen Nachteile hinsichtlich des Bedarfs an Datentransferkapazität, welche der Gegenstand der vorliegenden Patentanmeldung vermeiden soll.

Zur Ausführung einer Aktualisierung gemäß der Erfindung benötigen alle Fernsehempfänger TV1 ... TVn neben den genannten Antenneneingängen AS, AT bzw. AC zum Empfang von Fernsehrundfunksignalen DVB-S, DVB-T bzw. DVB-C auch einen internetfähigen Netzwerkanschluss NW und eine empfängerseitige Anwendungs-Software R-AS.

Die empfängerseitige Anwendungs-Software R-AS übernimmt neben dem Aufbau einer internetgestützten bidirektionalen Kommunikationsverbindung L1 ... Lm zu einem Aktualisierungsserver AM, DTS1, DTS2 oder DTS3 im Verteilnetzwerk des zentralen Aktualisierungsdienstanbieters ASP auch weitere noch weiter unten genannte Funktionen im Zusammenhang mit dem Bezug von Aktualisierungsdateien.

Alle denkbaren Empfangseinrichtungen für digitalen Videorundfunk, welche einen solchen Netzwerkanschluss NW und die genannte empfängerseitige Anwendungs-Software R-AS für eine Kommunikation mit einem Netzwerkserver aufweisen, sind somit im Sinne der vorliegenden Anmeldung Hybridempfänger und können, sofern die beschriebene empfängerseitige Anwendungs-Software R-AS installiert ist, den Gegenstand der Anmeldung nutzen.

Der Aktualisierungsdienstanbieter ASP kann sowohl der Hersteller von Hybridempfängern mit Wiedergabeschirm bzw. von Beistellgeräten, wie TV-Set-Top-Boxen, als auch ein Netzdienstbetreiber zum Verteilen von digitalen Videorundfunksignalen oder anderem Medieninhalt sein.

Der Aktualisierungsdienstanbieter ASP generiert Aktualisierungsdateien in Form von Programmdateien, welche jeweils an die Hardwareausführung der Fernsehempfänger TV1 ... TVn, die verschiedene Empfängertypen sein können bzw. entsprechende nutzer- oder ortspezifische Empfängereinstellungen aufweisen, angepasst sind. Damit existieren zumindest verschiedene Versionen von Programmdateien zum typenbezogenen Aktualisieren der Empfänger-Firmware der Fernsehempfänger TV1 ... TVn, von denen der Aktualisierungsdienstanbieter nach Dateiversionen geordnete Kopien der Aktualisierungsdateien an die Aktualisierungsserver AM, DTS1, DTS2, DTS3 des internetgestützten Verteilnetzwerks verteilt. Das heißt, die genannten Aktualisierungsdateien sind für die Fernsehempfänger TV1 ... TVn über ihre Netzwerkanschlüsse NW und das internetgestützte Verteilnetzwerk mit bidirektionalen Kommunikationsverbindungen L1 ... Lm nach einer Anfrage direkt zum Herunterladen von den Aktualisierungsservern verfügbar.

Das internetgestützte Verteilnetzwerk weist gemäß der Erfindung eine Client-Server-Struktur mit Aktualisierungsservern auf, von denen mindestens ein Server mittels einer serverseitigen Anwendungs-Software S-AS als Aktualisierungsmanager AM konfiguriert ist. Weitere Aktualisierungsserver sind räumlich verteilt und üben eine Funktion als vom Aktualisierungsmanager AM gesteuerte Dateitransferserver aus. Das heißt, der Aktualisierungsmanager AM weist ihnen Dateitransferaufgaben zu.

FIG.1 zeigt beispielhaft die Dateitransferserver DTS1 ... DTS3, welche in verschiedenen Landesregionen bzw. Staaten lokalisiert sein können.

Der Aktualisierungsmanager AM hat Information zu einer Verfügbarkeit der verteilten Kopien auf den Aktualisierungsservern und generiert anhand der Information zur Verfügbarkeit der verteilten Kopien von Aktualisierungsdateien eine Dateiversionsliste VL mit einer Aufstellung aktuell gültiger Dateiversionen von Aktualisierungsdateien, wobei die Dateiversionsliste VL auch die Verfügbarkeit entsprechender Dateikopien für einen Datentransfer auf den Aktualisierungsservern des internetgestützten Verteilnetzwerks und dem Aktualisierungsmanager AM umfasst.

Darüber hinaus sind Aktualisierungsdateien zumindest für konventionelle Fernsehempfänger auch über den oben beschriebenen Verteilweg des Datenrundfunks, der beispielhaft in FIG. 1 als DVB-C gekennzeichnet ist, und als Download über Heimcomputer, Notebooks und Ähnliches direkt beim Aktualisierungsdienstanbieter ASP zu beziehen. Diese Verteilwege sind jedoch nicht Gegenstand der vorliegenden Patentanmeldung.

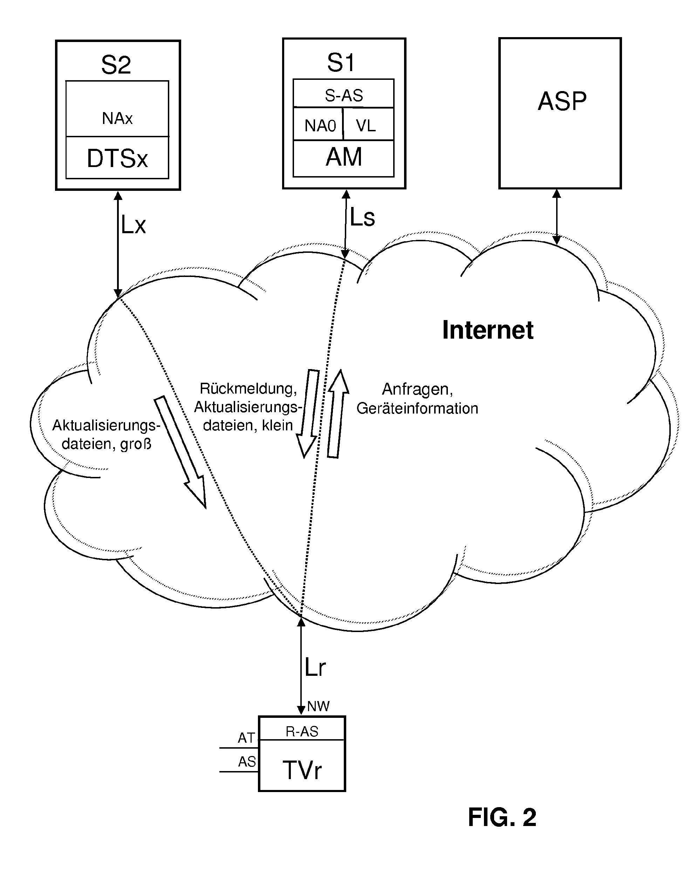

FIG. 2 zeigt eine Nutzung des Aktualisierungsdienstanbieters ASP gemäß der Erfindung über das Internet am Beispiel eines anfragenden Fernsehempfängers TVr. Die Nutzung setzt empfängerseitig pro Fernsehempfänger einen Netzwerkanschluss NW und die oben genannte Anwendungs-Software R-AS voraus. Die Anwendungs-Software R-AS generiert eine interaktive Benutzerschnittstelle mit einer Informationsfunktion, die Auskunft zum Softwarestatus der Empfänger-Firmware und der empfängerinternen Programmführungsdatenbank gibt, und eine Webanwendung, wie einen Internetbrowser. Die Webanwendung empfängt vom Aktualisierungsmanager AM und die Anwendungs-Software R-AS generiert ein Auswahlmenü für den Wiedergabeschirm, um dem Empfängernutzer die Aktualisierungsoptionen zur Auswahl bzw. zur Bestätigung anzubieten. Nachdem ein oder mehrere Aktualisierungsserver die Aktualisierungsdateien übertragen haben, ergänzt und ersetzt eine Aktualisierungsfunktion der Anwendungs-Software R-AS die Empfänger-Firmware bzw. die empfängerseitigen Datenbankdaten.

Empfängerseitig ist in jedem Fernsehempfänger eine Netzwerkadresse NA0, vorzugsweise in Form einer eindeutigen Bezeichnung des Aktualisierungsmanagers AM im Verteilnetzwerk, einem Hostnamen, gespeichert. Ein in FIG. 2 nicht gezeigtes Domain Name System im Internet wandelt bei einer Anfrage des Fernsehempfängers TVr diese eindeutige Bezeichnung des Aktualisierungsmanagers AM im Aktualisierungsserver S1 in eine maschinenlesbare Serveradresse um. Das ermöglicht dem Empfängernutzer unabhängig von einem im internetgestützten Verteilnetzwerk genutzten Übertragungsprotokoll eine bidirektionale Kommunikationsverbindung Lr - Ls mit dem Aktualisierungsmanager AM vom Aktualisierungsdienstanbieter ASP aufzubauen, zu kommunizieren und Anfragen an den Aktualisierungsmanager AM auszulösen.

Der Internetbrowser der empfängerseitigen Anwendungs-Software R-AS kommuniziert mit dem Aktualisierungsmanager AM unter Nutzung der Netzwerkadresse NA0. Jeder Fernsehempfänger sendet somit seine Anfrage zur Verfügbarkeit von neuen Aktualisierungsdateien für die Empfänger-Firmware und für die Programmführungsdatenbank an den Server S1. Dabei nutzt die Anwendungs-Software auf beiden Seiten ein bekanntes Übertragungsprotokoll.

Die Dateiversionsliste VL enthält neben einer Aufstellung von den Programm- bzw. Datenbankdateiversionen, welche der Aktualisierungsdienstanbieter ASP für entsprechende Empfängertypen herausgegeben hat, auch eine Zuordnung zur Verfügbarkeit entsprechender Dateikopien auf den Aktualisierungsmanager AM und den Dateitransferservern DTS1 ... DTS3.

Der Aktualisierungsmanager AM ist vorteilhaft als Webserver ausgeführt, welcher für empfängerseitige Anfragen und zur Interaktion mit den anfragenden Fernsehempfängern TV1 ... TVn eine Einstiegsseite zu einer komplexen Webseite des Aktualisierungsdienstanbieters ASP bietet und Kommunikationsdaten zur Interaktion mit der empfängerseitigen Anwendungs-Software R-AS bereitstellt.

Die empfängerseitige Anwendungs-Software R-AS bereitet die empfangenen Kommunikationsdaten für die grafische Benutzerschnittstelle so auf, dass ein visuell darstellbares Dialogmenü entsteht. Damit kann der Empfängernutzer mit dem Aktualisierungsdienstanbieter ASP in eine interaktive Kommunikation treten, um für seinen Fernsehempfänger TVr aufbereitete und an die Empfängerkonfiguration angepasste Aktualisierungsangebote abzufordern. Auf diese Weise kann der Aktualisierungsdienstanbieter ASP sein Leistungsangebot gegenüber einer Dateiaktualisierung über Datenrundfunk deutlich erhöhen und bereits bekannte Automatikfunktionen beim Konfigurieren der Empfänger besser an die Nutzerwünsche und die Verfügbarkeit von Mediendiensten am Empfangsort anpassen.

Der eigentliche Aktualisierungsmanager AM ist die genannte serverseitige Anwendungs-Software S-AS, welche auf dem Aktualisierungsserver S1 installiert ist und neben der Serverleitfunktion für die Dateitransferserver auch empfängerseitige Anfragen nach Programm- bzw. Datenbankdateien analysiert und entsprechend steuert. Aus Gründen der Zuverlässigkeit und Stabilität des Aktualisierungsdienstes kann die Anwendungs-Software S-AS auch noch auf weiteren Aktualisierungsservern, so auch auf dem Aktualisierungsserver S2, installiert sein. Im letzteren Fall kann der Aktualisierungsdienstanbieter ASP frei verfügen, welcher der Aktualisierungsserver S1 oder S2 die Serverleitfunktion ausführen soll.

Somit kann der Aktualisierungsdienstanbieter ASP sowohl Ausfälle von Aktualisierungsservern kompensieren oder einen solchen Aktualisierungsserver als Aktualisierungsmanager AM wählen, der sich im Verteilnetzwerk an einer Position befindet, welche die schnellsten Kommunikationsverbindungen zu den Fernsehempfängern realisiert. Dafür kann beispielsweise der Aktualisierungsdienstanbieter ASP serverseitig einen Tausch der Netzwerkadressen und der Serverleitfunktionen zwischen den Aktualisierungsservern S1 und S2 veranlassen. Dabei wird die Serverleitfunktion im Aktualisierungsserver S1 deaktiviert, sodass dieser als Dateitransferserver arbeitet und im Aktualisierungsserver S2 die Anwendungs-Software S-AS aktualisiert.

Für die Kommunikation eignen sich Übertragungsprotokolle, wie das ,Hyper Text Transfer Protocol', HTTP, oder das ,Hyper Text Transfer Protocol Secure', HTTPS, gemeinsam mit Netzwerkprotokollen, wie dem ,Internet-Protokoll', IP, und dem ,Transmission Control Protocol', TCP.

Für die Verteilung der Aktualisierungsdaten können auch andere Übertragungsprotokolle, wie das ,Network News Transfer Protocol', NNTP, für Nachrichten in Newsgroups oder das ,Lightweight Directory Access Protocol', LDAP, vorteilhaft eingesetzt werden. Diese Übertragungsprotokolle ermöglichen, dass die Aktualisierungsserver untereinander Daten austauschen und bei kompletter Verteilung der Dateikopien auf den Aktualisierungsservern des Aktualisierungsmanagers AM den im Verteilnetzwerk nächsten Dateitransferserver für den eigentlichen Datentransfer zum anfragenden Fernsehempfänger TVr auswählen. Damit reduziert sich die benötigte Gesamtbandbreite für den Datentransfer.

Eine weitere Einsparung von Datentransferlast ist mit einem Netzwerkprotokoll zu erreichen, welches beim Aktualisieren einer installierten Datei anstelle einer neuen Dateiversion nur die Differenzdaten zwischen beiden Dateiversionen überträgt. So hat beispielsweise das Übertragungsprotokoll ,Rsync' das Ziel, große Dateien mit weitestgehend wenig geändertem Inhalt besonders ökonomisch von einem Server zu einem Klienten zu übertragen. Insbesondere bei den täglichen Aktualisierungsdateien für die Programmführungsdatenbank bleibt ein großer Teil des Dateninhalts gegenüber der bereits installierten Aktualisierungsdatei unverändert. Das Netzwerkprotokoll ,Rsync' überträgt in einem solchen Fall nur die Metadaten über die Kommunikationsverbindung, die sich seit der letzten Aktualisierung geändert haben. Beim Transfer von Metadaten, wie beispielsweise Bilddaten aus Filmszenen oder einem anderen Medieninhalt für die Programmführungsdatenbank, wird dann beispielsweise bei einem ein- oder mehrwöchigen Programmführer ein tägliches Übertragen der datenintensiven Bildinformation vermieden. Der Fernsehempfänger erhält die Bilddaten für eine mehrtägige/mehrwöchige Programmübersichtsliste nur am ersten Tag, an dem ein Bild erstmal verfügbar sein soll, und nutzt diese Bilddaten auch an den folgenden Tagen für Anzeigen in der Programmliste.

Im Gegensatz dazu muss ein Programmführungssystem, das Metadaten auf der Basis von Datenrundfunk erhält, die selben Teilmengen an Metadaten täglich übertragen, obwohl diese Daten bereits an den Vortagen in der Programmführungsdatenbank gespeichert waren.

Auch ein Übertragungsprotokoll, welches Daten gleichzeitig von mehreren Aktualisierungsservern bezieht, wie beispielsweise das Protokoll ,Jigdo', kann vorteilhaft genutzt werden. Das Protokoll bietet dem Aktualisierungsdienstanbieter den Vorteil, dass dieser anstelle einer großen Dateikopie von einer vollständigen Dateiversion auf verschiedenen Aktualisierungsservern kleine Teilkomponenten der großen Dateikopie ablegt. Im Falle einer Aktualisierung übertragen nur jene Aktualisierungsserver ihre Teilkomponente der großen Dateikopie zum Fernsehempfänger TVr, welche der Empfänger noch nicht bei einem früheren Datentransfer erhalten hat. Die vollständige aktuelle Dateiversion setzt die empfängerseitige Anwendungs-Software R-AS aus den von verschiedenen Aktualisierungsservern übertragenen Teilkomponenten zusammen. Teilkomponenten können beispielsweise alle Metadaten eines einzigen Tages sein, welche zum Generieren einer ein- oder mehrwöchigen Programmführungsübersicht benötigt werden.

Ein Fernsehempfänger TVr, dem die Metadaten der letzten drei Tage fehlen, bekäme bei seiner Anfrage von drei Aktualisierungsservern jeweils eine Teilkomponente mit den Metadaten eines fehlenden Tages geliefert.

Ein Aktualisieren des Softwarestatus des Fernsehempfängers TVr erfolgt im Detail entsprechend den nachfolgenden Schritten:

Die empfängerseitige Anwendungs-Software R-AS baut infolge einer Nutzereingabe oder periodisch und automatisch entsprechend einer geräteinternen Softwarekonfiguration über den Netzwerkanschluss NW eine bidirektionale internetgestützte Kommunikationsverbindung Lr - Ls zum Aktualisierungsmanager AM auf. Dabei wird grundsätzlich die Netzwerkadresse NA0 des Aktualisierungsmanagers AM genutzt, welche der Empfängerhersteller bereits mit der Auslieferung im Fernsehempfänger TVr gespeichert hat.

Über die aufgebaute Kommunikationsverbindung Lr - Ls richtet die empfängerseitige Anwendungs-Software R-AS eine Anfrage bezüglich einer Softwareaktualisierung an die Einstiegsseite des Aktualisierungsmanagers AM.

Während einer ldentifikationsphase im Rahmen der Empfängeranfrage erfolgt ein beidseitiger Datenaustausch.

In einer Ausführungsform der Erfindung weist die serverseitige Anwendungs-Software S-AS des Aktualisierungsmanagers AM Geräteerkennungsmittel auf, welche beim Datenaustausch empfängerseitig Geräteinformation zum anfragenden Empfängertyp und zum Softwarestatus der empfängerinternen Programmführungsdatenbank erfragt. Nachfolgend vergleicht die serverseitige Anwendungs-Software S-AS die Dateiversionsliste VL mit der erfragten Empfängerinformation und identifiziert für den Empfängertyp entsprechende Programm- bzw. Datenbankdateiversionen mit einem jüngeren Aktualitätsdatum. Im Ergebnis des Dateiversionsvergleichs definiert die serverseitige Anwendungs-Software S-AS benötigte Aktualisierungsdateien und sendet ein Aktualisierungsangebot zum Empfänger. Bei einer Annahme des Aktualisierungsangebots berechnet die serverseitige Anwendungs-Software S-AS die Datentransferlast anhand der Dateigröße und klassifiziert die empfängerseitige Anfrage hinsichtlich ihrer Datentransferlast und der Auslastung der Aktualisierungsserver im Verteilnetzwerk.

In einer alternativen Ausführungsform der Erfindung kann die empfängerseitige Anwendungs-Software R-AS auch so programmiert sein, dass diese unmittelbar nach dem Aufbau der Kommunikationsverbindung Lr - Ls zum Aktualisierungsmanager AM einen Statusbericht mit Geräteinformation zur Identität des Empfängertyps, zur installierten Firmware-Version und zum Aktualitätsstatus der geräteinternen Datenbankdateien sendet. Anhand des Statusberichts und dem Ergebnis eines Dateiversionsvergleichs können die Kalkulationsmittel wie in der vorangegangenen Ausführungsform die zur Aktualisierung benötigten Aktualisierungsdateien definieren. In beiden Ausführungsformen klassifiziert die serverseitige Anwendungs-Software S-AS im Aktualisierungsmanager AM die definierten Aktualisierungsdateien hinsichtlich ihrer Dateigröße und der erforderlichen Datentransferlast.

Nach dem Klassifizieren der definierten Aktualisierungsdateien sendet die serverseitige Anwendungs-Software S-AS in ihrer Funktion als Aktualisierungsmanager AM eine Aufstellung von gerätespezifisch verfügbaren Aktualisierungsdateien zum anfragenden Fernsehempfänger TVr, welche die empfängerseitige Anwendungs-Software R-AS zum Anzeigen auf einem Wiedergabeschirm aufbereitet.

In einer alternativen Ausführung der Erfindung kommuniziert die empfängerseitige Anwendungs-Software R-AS im Fernsehempfänger TVr über die bidirektionale Kommunikationsverbindung Lr - Ls mit dem Aktualisierungsmanager AM. Dabei werden Daten für die Dateiversionsliste VL der Aktualisierungsdateien ausgetauscht und anhand der empfangenen Dateiversionsliste VL und dem empfängerseitigen aktuellen Softwarestatus ein Bedarf an Kopien von Aktualisierungsdateien zur Empfänger-Firmware und Datenbankdateien definiert. Die definierten Aktualisierungsdateien werden danach so aufbereitet, dass der Nutzer diese mithilfe eines Wiedergabeschirms auswählt oder eine vorgeschlagene Auswahl in einem Auswahlmenü bestätigen kann.

In allen vorgenannten Ausführungsformen sendet die empfängerseitige Anwendungs-Software R-AS nach der Auswahl bzw. dem Bestätigen der Auswahl eine Anfrage nach Aktualisierungsdateien gemäß der Auswahl dem Aktualisierungsmanager AM und aktualisiert den Softwarestatus des Fernsehempfängers TVr mit den empfangenen Aktualisierungsdateien.

Nachdem die Aktualisierungsdateien nach einer der vorgenannten Möglichkeiten definiert sind, bietet die serverseitige Anwendungs-Software S-AS abhängig von der Dateigröße der definierten Aktualisierungsdateien und der aktuellen Auslastung der Aktualisierungsserver im Verteilnetzwerk dem Nutzer eine der nachfolgenden Aktualisierungsoptionen an:
- Der Aktualisierungsmanager AM übt zusätzlich die Funktion eines Aktualisierungsservers aus, in FIG.2 Aktualisierungsserver S1, und beantwortet Anfragen, welche eine Datentransferlast unterhalb des Schwellwertes erfordern, beispielsweise wenige Hundert Bit Datentransferlast, unmittelbar über die noch bestehende Kommunikationsverbindung Lr - Ls. Das heißt, der Aktualisierungsmanager AM erhält und beantwortet derartige Anfragen zentral für alle Fernsehempfänger.
- Der Aktualisierungsserver S1 hat wenig Reserven für Transferleistungen, übt daher nur die Funktion als Aktualisierungsmanager AM aus, während er Aktualisierungsanfragen, welche eine Datentransferlast oberhalb des serverseitig definierten Schwellwertes erfordern, automatisch an die Netzwerkadresse NAx eines Aktualisierungsservers mit entsprechender Reserve für die Transferleistung leitet, in FIG.2 Aktualisierungsserver S2. Der beauftragte Aktualisierungsserver S2 übernimmt über die umgeleitete Kommunikationsverbindung Lr - Lx den sofortigen Datentransfer zum anfragenden Fernsehempfänger TVr.
- Wenn der Aktualisierungsmanager AM keinen Dateitransferserver mit einer entsprechenden Reserve für die Transferleistung findet, sendet er mindestens eine Netzwerkadresse NAx von einem Dateitransferserver, der die angeforderte(n) Aktualisierungsdatei(en) übertragen kann, zum anfragenden Fernsehempfänger TVr und beendet die bestehende Kommunikationsverbindung Lr - Ls. Zum Bezug von fehlenden Aktualisierungsdateien muss die empfängerseitige Anwendungs-Software R-AS zu einem späteren Zeitpunkt eine neue empfängerseitige Anfrage an den zugewiesenen Aktualisierungsserver richten.
   Im vorliegenden Beispiel in FIG. 2 über die Kommunikationsverbindung Lr - Lx an den Aktualisierungsserver S2, der als Dateitransferserver DTSx konfiguriert ist. Der anfragende Fernsehempfänger TVr erhält dann die fehlenden Aktualisierungsdateien über die neue Kommunikationsverbindung Lr - Lx vom Dateitransferserver DTSx.

Das heißt, Anfragen zum Herunterladen von Aktualisierungsdateien entscheidet der Aktualisierungsmanager AM anhand einer Information, welcher Dateitransferserver im Verteilnetzwerk am wenigsten belastet ist. Da der Schwellwert für die serverseitige Datentransferlast definiert werden kann, lässt sich die Größe der Datentransferlast für alle Aktualisierungsserver im Verteilnetzwerk frei definieren.

Nach einer vorteilhaften Fortführung der Erfindung übernimmt der Aktualisierungsmanager AM die Zeitplanung des Datentransfers für die Dateitransferserver im Verteilnetzwerk. Dabei weist die serverseitige Anwendungs-Software S-AS empfängerseitigen Anfragen nach Aktualisierungsdateien mit einer Datentransferlast oberhalb des genannten Schwellwertes neben der Netzwerkadresse NAx zum beauftragten Dateitransferserver DTSx auch ein Zeitfenster zu, das den Zeitbereich definiert, in dem die gewünschte Aktualisierungsdatei nach einer gesonderten Anfrage der empfängerseitigen Anwendungs-Software R-AS über die erneut hergestellte Kommunikationsverbindung Lr - Lx abrufbar ist.

Vorteilhaft ist die empfängerseitige Anwendungs-Software R-AS so ausgeführt, dass diese ohne ein Mitwirken des Empfängernutzers innerhalb des Zeitfensters die genannte Kommunikationsverbindung Lr - Lx zum beauftragten Dateitransferserver DTSx aufbaut und die gewünschte(n) Aktualisierungsdatei(en) abfordert.

Im Gegensatz zur Struktur des Aktualisierungsmanagers AM kann die serverseitige Anwendungs-Software S-AS eines Dateitransferservers keine Serverleitfunktionen aufweisen. Vorteilhaft generieren die Dateitransferserver eine Einstiegsseite, welche anstelle der oben genannten Serverleitfunktionen den vom Aktualisierungsmanager AM erteilten Auftrag zum schnellen Datentransfer der Aktualisierungsdateien entgegennimmt und ausführt.

In einer vorteilhaften Ausführung der Erfindung tauscht der Aktualisierungsmanager AM mit den Dateitransferservern innerhalb des Verteilnetzwerkes Daten zur Lastverteilung bezüglich der Datentransferlast aus. Im Ergebnis des Austauschs meldet der Aktualisierungsmanager AM der empfängerseitigen Anwendungs-Software R-AS eine Netzwerkadresse von einem Dateitransferserver, der aktuell eine Reserve für Transferleistungen hat und den Datentransfer möglichst schnell realisieren kann.

Vorteilhaft berücksichtigt der Aktualisierungsmanager AM bei der Kalkulation und beim Beauftragen eines Dateitransferservers auch die Empfängerstandorte und die netzseitige Anbindung der empfängerseitigen Anwendungs-Software R-AS, insbesondere die Entfernung zwischen dem anfragenden Fernsehempfänger und dem beauftragten Dateitransferserver sowie die Übertragungsgeschwindigkeit der verfügbaren Kommunikationsverbindungen zwischen beiden Einrichtungen. Auf diese Weise kann serverseitig jeweils ein Dateitransferserver ausgewählt werden, der infolge seines Serverstandortes eine möglichst hohe Datentransfergeschwindigkeit beim Abwickeln des Datentransfers erzielt.

Der Aktualisierungsmanager AM beschafft sich die Information zum Empfängerstandort des anfragenden Fernsehempfängers aus dem oben genannten Domain Name System anhand der Empfängeradresse.

Der Aktualisierungsdienstanbieter ASP kann zum Erstellen der Dateiversionsliste VL auch andere Sortierkriterien heranziehen. Beispielsweise kann eine Sortierung anhand von Satellitenpositionen und/oder einer Sprachauswahl erfolgen. Wenn der Aktualisierungsdienstanbieter ASP anstelle einer großen Datenbankdatei mehrere kleinere Datenbankdateien mit einer Untermenge von Metadaten anbietet, deren Inhalt jeweils an empfängerseitige Satellitenpositionen und/oder eine Sprachauswahl angepasst ist, wird die Datentransferlast beispielsweise für die Metadaten der Programmführungseinrichtung deutlich reduziert. Der Aktualisierungsmanager AM muss in diesem Fall zusätzlich die Empfängereinstellungen bezüglich Satellitenpositionen und/oder einer Sprachauswahl ermitteln und zur Planung der Datentransferlast den ermittelten Empfängereinstellungen die entsprechenden Versionen der Datenbankdateien zum Datentransfer zuordnen.

Nach einer vorteilhaften Ausführung der Erfindung benutzt die Client-Server-Struktur zwischen dem Fernsehempfänger TVr und den Aktualisierungsservern S1, S2 zur Authentifizierung und Sicherung der Integrität des Aktualisierungsdienstanbieters ASP ein asymmetrisches Datenverschlüsselungssystem, mit einem öffentlichen Schlüssel und einem privaten Schlüssel beim Datenaustausch, wobei der anfordernde Fernsehempfänger TVr den öffentlichen Schlüssel des Aktualisierungsmanagers AM nutzt. Beispielsweise erfolgt die Authentifizierung mithilfe des SSL-Protokolls.

Ein solches Schlüsselpaar bietet eine hohe Sicherheit gegen unberechtigten und unkontrollierten Zugriff zum Aktualisierungsdienst in missbräuchlicher Absicht.

In einer erweiterten Ausführung der Erfindung kann der Aktualisierungsmanager AM eine Dateiversionsliste VL, welche so aufbereitet ist, dass diese für die anfragenden Fernsehempfänger TVr jeweils die entsprechend aktuellen Dateiversionen aufführt, auch auf einen alternativen Übertragungsweg versenden.

Als alternativen Übertragungsweg für die Dateiversionslisten VL wird entweder zu einer festgesetzten Zeit ein DVB-Datenrundfunkdienst oder im internetgestützten Verteilnetzwerk ein Datenübertragungsprotokoll in Form eines Protokolls für E-Mails oder einer News-Nachricht über einen E-Mail- bzw. News-Server genutzt.

Sofern die Empfängernutzer die Dateiversionsliste VL mittels eines Übertragungsprotokolls für E-Mail- oder News-Sendungen erhalten, kann der Inhalt der Dateiversionsliste VL besser an die Empfänger-Firmware, die Empfängereinstellungen und den Empfängerstandort angepasst werden. Damit besitzt die empfängerseitige Anwendungs-Software R-AS ausreichend Information, um auch ohne weitere Anfrage beim Aktualisierungsmanager AM eine Kommunikationsverbindung zu einem zeitlich zugewiesenen Dateitransferserver aufzubauen und die Aktualisierungsdateien abzufordern.

Ein wesentlicher Vorteil der aufgezeigten Maßnahmen gemäß der Erfindung besteht darin, dass sich insbesondere bei Anfragen der empfängerseitigen Anwendungs-Software R-AS nach Dateien mit geringer Größe die Einschaltdauer des anfragenden Fernsehempfängers TVr im energiereduzierten Empfangszustand verkürzt. Dadurch wird der Energieverbrauch des Empfängers reduziert. Außerdem werden Nutzungseinschränkungen während der Wartezeiten bei einer herkömmlichen Aktualisierung über Datenrundfunk vermieden.

Der Verzicht auf ein Datenkarussell erhöht die verfügbare Transferkapazität des Aktualisierungsdienstanbieters ASP, sodass das Angebot an Aktualisierungsleistungen und Aktualisierungsfunktionen wesentlich erweitert werden kann.

Wenn ein Gerätehersteller die empfängerseitige Anwendungs-Software R-AS seiner Fernsehempfänger immer mit der Netzwerkadresse NA0 des Aktualisierungsmanagers AM ausstattet, richten sich grundsätzlich alle empfängerseitigen Aktualisierungsanfragen an den Aktualisierungsmanager AM, sodass dessen serverseitige Anwendungs-Software S-AS problemlos die aktuellen Computerressourcen zum Erfüllen der Aktualisierungswünsche kalkulieren kann.

Ein besonderer Vorteil der dargestellten Lösung besteht auch darin, dass der Aktualisierungsdienstanbieter ASP die Möglichkeit hat, auch verschiedene Dateiversionen von Datenbankdateien zum Aktualisieren der geräteinternen Programmführungsdatenbank sowohl hinsichtlich einer Sprach- und Medienquellenauswahl als auch hinsichtlich von Metadaten für Programminhalt anzubieten. Auf diese Weise kann beispielsweise Empfängernutzern von Satellitenfernsehempfängern in einem südeuropäischen Land eine andere Rundfunkdienstliste angeboten werden als Empfängernutzern von Satellitenfernsehempfängern oder gar von Kabelfernsehempfängern in Deutschland.

Für die Datenbankdateien können somit auch weitere Sortierkriterien zum Strukturieren der Dateiversionen herangezogen werden. Beispielsweise kann eine zusätzliche Sortierung auch anhand von verschiedenen Satellitenpositionen und/oder einer Sprach- bzw. Standortauswahl erfolgen, welche der Empfängernutzer beim Konfigurieren seines Hybridempfängers softwareseitig einstellt.

Damit ist der Aktualisierungsdienstanbieter ASP über einen freien Zugang zum Internet, dass heißt ohne ein Netzportal eines Dienstanbieters, für den Empfängernutzer erreichbar und hat einen schnelleren Zugriff auf Programmdateien für zusätzliche Softwaremodule. Damit kann beispielsweise schnell und einfach die grafische Benutzerschnittstelle mit internetbezogenen Anwendungen für Dialog- und Steuerelemente, wie Widgets, gemäß den Wünschen von Nutzern erweitert und die Programmführungsdatenbank aktualisiert werden.

Dabei kann der Empfängernutzer selbst entscheiden, wann er die Aktualisierung der Datenbankdateien vornimmt und Programmdateien für zusätzliche Anwendungen herunterlädt. Während der Aktualisierungsdauer stehen dem Empfängernutzer alle Rundfunkempfangsteile des Fernsehempfängers uneingeschränkt für die Wiedergabe von Inhalt von Rundfunk- bzw. Kabelfernsehdiensten zur Verfügung.

Außerdem schützt die gewählte Client-Server-Struktur beim Datentransfer von aktuellen Datenbankdateien die Privatsphäre des Empfängernutzers und vermeidet ein unberechtigtes Nutzen des Aktualisierungsdienstanbieters ASP und Manipulationen beim Datentransfer. Insbesondere ist für Dritte nicht erkennbar, wann und für welche Rundfunkdienste und Internetdienste ein Empfängernutzer mit seinen Empfängereinstellungen bezüglich Medienquelle, Medieninhalt und Metainformation abfragt.

So ist es möglich, ständig aktuelle Aufstellungen mit den Einstell- und Übertragungsparametern zu aktuell verfügbaren Rundfunkdiensten zur Pflege der Rundfunkdienstliste entsprechend der ständig steigenden Anzahl von Rundfunkdiensten bereitzustellen.

Die mit den Mitteln der Erfindung erhöhte Datenübertragungskapazität ermöglicht beispielsweise auch, zusätzlich eine Auflistung mit Internetverbindungen bereitzustellen. Diese können dem Nutzer einen Aufruf von Internetdiensten mithilfe der Programmführungseinrichtung erleichtern.

Durch ein Hinzunehmen von Suchmaschinen im Internet kann automatisch eine erweiterte Programmführungsliste erstellt werden, die neben Fernseh- und Hörrundfunk auch Medieninhalt anderer Medienquellen enthält, welche zum verfügbaren Medieninhalt zusätzlich Hintergrundinformation bereitstellt. Auch eine optische Ausgabe, die dem Empfängernutzer einen Überblick zum verfügbaren Medieninhalt auf verschiedenen Medienübertragungswegen gibt, ist durch eine solche zusätzliche Auflistung von Informationsseiten mit dem Gegenstand der vorliegenden Erfindung im Internet möglich.

## Patentansprüche

1. Methode zum Aktualisieren eines Softwarestatus von Fernsehempfängern über eine bidirektionale Kommunikationsverbindung (Lr) mittels Anfragen von Fernsehempfängern (TV1 ... TVn) nach Aktualisierungsdateien an einen Aktualisierungsdienstanbieter (ASP) über ein internetgestütztes Verteilnetzwerk, das einen Verbund von Aktualisierungsservern (S1, S2) aufweist, wobei die Methode simultan über Kommunikationsverbindungen (L1 ... Lm) im Verteilnetzwerk die folgenden Funktionen ausführt:
- der Aktualisierungsdienstanbieter (ASP) verteilt nach Dateiversionen geordnete Kopien der Aktualisierungsdateien an die Aktualisierungsserver des internetgestützten Verteilnetzwerks;
- ein Aktualisierungsserver (S1) übt als Aktualisierungsmanager (AM) eine Serverleitfunktion aus, hat Information zu einer Verfügbarkeit der verteilten Kopien auf den Aktualisierungsservern und generiert anhand der Information zur Verfügbarkeit der Aktualisierungsdateien eine Dateiversionsliste (VL);
- eine empfängerseitige Anwendungs-Software (R-AS) in den Fernsehempfängern (TV1 ... TVn) richtet die Anfragen nach Aktualisierungsdateien grundsätzlich an den Aktualisierungsmanager (AM);
- die Anfragen bewirken einen Datenaustausch zwischen dem Aktualisierungsmanager (AM) und der empfängerseitigen Anwendungs-Software (R-AS) zum Organisieren des Datentransfers zum anfragenden Fernsehempfänger (TVr) und
- die Serverleitfunktion des Aktualisierungsmanagers (AM) legt einen beauftragten Aktualisierungsserver aus dem Verteilnetzwerk fest, der den Datentransfer gemäß den empfängerseitigen Anfragen zu den entsprechenden Fernsehempfängern übernimmt.

2. Methode nach Anspruch 1, bei der eine serverseitige Anwendungs-Software (S-AW) die Serverleitfunktion des Aktualisierungsmanagers (AM) realisiert, welche:
- vom anfragenden Fernsehempfänger (TVr) einen Bedarf an Kopien von Aktualisierungsdateien erfasst
- für die zu kopierenden Aktualisierungsdateien anhand ihrer Dateigröße eine benötigte Datentransferlast kalkuliert und
- anhand der klassifizierten Datentransferlast den mit dem Datentransfer beauftragten Aktualisierungsserver aus dem Serververbund festlegt.

3. Methode nach Anspruch 2, bei der die Serverleitfunktion den Datentransfer der Aktualisierungsdateien in der Art organisiert, dass der Aktualisierungsmanager einerseits Kopien der Aktualisierungsdateien mit einer Datentransferlast unterhalb eines serverseitig festgelegten Schwellwertes unverzüglich über die bestehende Kommunikationsverbindung (Lr - Ls) überträgt; aber andererseits, sobald die benötigte Datentransferlast den festgelegten Schwellwert überschreitet, eine Weiterleitung der Anfrage an einen beauftragten Dateitransferserver (DTSx) erfolgt oder der Aktualisierungsmanager (AM) dem anfragenden Fernsehempfänger (TVr) eine Netzwerkadresse (NAx) zum Dateitransferserver (DTSx) sendet, welcher im Auftrage des Aktualisierungsmanagers (AM) die gewünschte(n) Kopie(n) der Aktualisierungsdatei(en) für einen Abruf durch den Fernsehempfänger (TVr) bereithält.

4. Methode nach Anspruch 3, bei welcher die serverseitige Anwendungs-Software (S-AS) des Aktualisierungsmanagers (AM) die Zeitplanung des Datentransfers für die Dateitransferserver des Verteilnetzwerks ausführt und empfängerseitigen Anfragen nach Aktualisierungsdateien mit einer Datengröße oberhalb des Schwellwertes neben der Netzwerkadresse (NAx) zum beauftragten Dateitransferserver (DTSx) auch ein Zeitfenster zuweist, das den Zeitbereich anzeigt, in dem die gewünschte Aktualisierungsdatei nach einer gesonderten Anfrage durch die empfängerseitige Anwendungs-Software (R-AS) vom Dateitransferserver (DTSx) über eine Kommunikationsverbindung (Lr - Lx) abrufbar ist.

5. Methode nach Anspruch 1, bei welcher der Aktualisierungsdienst verschiedene Dateiversionen von Aktualisierungsdateien entsprechend von Empfängertypen, einer Sprachauswahl und/oder zu verschiedenen Satellitenpositionen bereitstellt und bei welcher die serverseitige Anwendungs-Software (S-AS) in einem Dialog mit der empfängerseitigen Anwendungs-Software (R-AS) die kundenspezifischen Einstellungen des anfragenden Fernsehempfängers (TVr) bezüglich Satellitenpositionen und/oder einer Sprachauswahl ermittelt, um selbsttätig entsprechende Dateiversionen als Kopien der Aktualisierungsdateien bereitzustellen.

6. Methode nach Anspruch 1, bei der die serverseitige Anwendungs-Software (S-AS) zusätzlich folgende Serverleitfunktionen für die Aktualisierungsserver zentral übernimmt:
- ein Prüfen der Zugangsberechtigung zu den Aktualisierungsservern und
- ein Prüfen der Anwendbarkeit von verfügbaren Dateiversionen entsprechend des empfängerseitigen Hardwaretyps bzw. der Hardwarestruktur.

7. Verteilnetzwerkstruktur mit Aktualisierungsservern (S1, S2) und internetfähigen Fernsehempfängern (TV1 ... TVn), die zum Aktualisieren eines Softwarestatus der Fernsehempfänger jeweils über eine bidirektionale Kommunikationsverbindung (L1, L2, ... Lm) mit einem Aktualisierungsdienstanbieter (ASP) kommunizieren, wobei die Aktualisierungsserver einen Verbund von Dateitransferservern und einen Aktualisierungsmanager (AM) enthalten, und wobei der Aktualisierungsmanager (AM) für die Dateitransferserver eine Serverleitfunktion hinsichtlich einer Lastverteilung bei einem Datentransfer und hinsichtlich einer Erhöhung einer Datentransferrate zu anfragenden Fernsehempfängern ausübt.

8. Verteilnetzwerkstruktur nach Anspruch 7, mit Dateitransferservern, denen jeweils eindeutige Netzwerkadressen (NA1 ... NA3) für den Datentransfer von Aktualisierungsdateien zugeordnet sind, deren Nutzung die Serverleitfunktion steuert.

9. Verteilnetzwerkstruktur nach Anspruch 7, mit verschieden lokalisierten Dateitransferservern, welche entsprechend einer regionalen Verteilung der Fernsehempfänger (TV1 ... TVn) lokal so verteilt sind, dass kurze Transferwege zum Erhöhen der Datentransferrate zu den Fernsehempfängern erreicht werden.

10. Verteilnetzwerkstruktur nach Anspruch 7, mit Dateitransferservern, die physisch und räumlich vom Aktualisierungsmanager (AM) getrennt angeordnet sind und auf Rechenanlagen für Internetdienste mehrerer Dienstanbieter als Anwendungs-Software installiert sind.

11. Aktualisierungsmanager (AM) für die Verteilnetzwerkstruktur nach Anspruch 7, welcher eine serverseitige Anwendungs-Software (S-AS) aufweist, welche:
- eine Dateiversionsliste (VL) von Aktualisierungsdateien enthält, die bezüglich Empfängertypen geordnet ist, sowie die Verfügbarkeit entsprechender Dateikopien auf den Dateitransferservern anzeigt;
- eine in den Fernsehempfängern (TV1 ... TVn) gespeicherte Netzwerkadresse (NA0) besitzt und eine Internet-Einstiegsseite für eine bidirektionale Kommunikation mit anfragenden Fernsehempfängern generiert, um individuelle empfängerseitige Anfragen beim Aktualisierungsdienstanbieter (ASP) entgegenzunehmen und zu verwalten;
- anhand der Dateiversionsliste (VL) die zum Aktualisieren benötigten Dateiversionen definiert und
- festlegt, welcher Aktualisierungsserver den Datentransfer der Aktualisierungsdateien zum anfragenden Fernsehempfänger (TVr) ausführt.

12. Aktualisierungsmanager nach Anspruch 11, der zusätzliche Funktionsmodule aufweist zum:
- Ermitteln des Softwarestatus im anfragenden Fernsehempfänger (TVr) und eines Aktualisierungsbedarfs
- Definieren einer erforderlichen Datentransferlast beim Aktualisieren des anfragenden Fernsehempfängers (TVr) und
- Klassifizieren der empfängerseitigen Anfragen hinsichtlich einer Datentransferlast.

13. Aktualisierungsmanager nach Anspruch 11, bei dem die serverseitige Anwendungs-Software (S-AS) mit den Dateitransferservern kommuniziert, um deren Auslastung mit dem Datentransfer zu ermitteln.

14. Aktualisierungsmanager nach Anspruch 11, mit Geräteerkennungsmitteln in der serverseitigen Anwendungs-Software (S-AS), welche Information zum Empfängertyp, zur im anfragenden Fernsehempfänger (TVr) installierten Firmware-Version und zum Softwarestatus von gespeicherten Datenbankdateien ermittelt.

15. Aktualisierungsmanager nach Anspruch 11, bei dem die serverseitige Anwendungs-Software (S-AS) den Datentransfer der gewünschten Aktualisierungsdateien in der Art organisiert, dass der Aktualisierungsmanager einerseits empfängerseitige Anfragen, die eine Datentransferlast unterhalb eines serverseitig festgelegten Schwellwertes erfordern, unverzüglich über die bestehende Kommunikationsverbindung (Lr - Ls) überträgt; aber andererseits, sobald die Datentransferlast der empfängerseitige Anfragen den Schwellwert überschreitet, eine Weiterleitung der Anfrage an einen beauftragten Dateitransferserver (DTSx) erfolgt oder der Aktualisierungsmanager dem anfragenden Fernsehempfänger (TVr) eine Netzwerkadresse (NAx) zum Dateitransferserver (DTSx) sendet, welcher im Auftrage des Aktualisierungsmanagers die gewünschte(n) Aktualisierungsdatei(en) für einen Abruf durch den Fernsehempfänger (TVr) bereithält.

16. Fernsehempfänger für die Verteilnetzwerkstruktur nach Anspruch 7, welcher eine empfängerseitige Anwendungs-Software (R-AS) aufweist, die über eine bidirektionale Kommunikationsverbindung (L1, L2, ... Lm) mit dem Aktualisierungsmanager kommuniziert, um:
- Daten für die Dateiversionsliste (VL) der Aktualisierungsdateien zu erhalten
- anhand der Dateiversionsliste (VL) und dem aktuellen Softwarestatus einen Bedarf an Kopien von Aktualisierungsdateien zur Empfänger-Firmware und Datenbankdateien zu definieren
- Anfragen nach den definierten Aktualisierungsdateien grundsätzlich an den Aktualisierungsmanager zu richten und
- den Softwarestatus des Fernsehempfängers mit den Aktualisierungsdateien zu aktualisieren.
